(19) Europäisches Patentamt

European Patent Office

Office européen des brevets

(11) Publication number: **0 272 649 B1**

(12) **EUROPEAN PATENT SPECIFICATION**

(45) Date of publication of patent specification: **19.07.95**  (51) Int. Cl.⁶: **C09B 63/00**, C09B 69/06

(21) Application number: **87118853.8**

(22) Date of filing: **18.12.87**

(54) Spherical fine particulate pigment and process for preparing the same.

(30) Priority: **23.12.86 JP 307163/86**

(43) Date of publication of application:
**29.06.88 Bulletin 88/26**

(45) Publication of the grant of the patent:
**19.07.95 Bulletin 95/29**

(84) Designated Contracting States:
**DE ES FR GB IT**

(56) References cited:
**GB-A- 272 585          GB-A- 946 053**
**GB-A- 1 072 702      US-A- 3 779 924**
**US-A- 4 444 592      US-A- 4 576 649**

**CHEMICAL ABSTRACTS, vol. 82, no. 26, June 30, 1975, Columbus, Ohio, US;abstract no. 172602G, page 89 ;**

**CHEMICAL ABSTRACTS, vol. 89, no. 22, November 27, 1978, Columbus, Ohio, US;abstract no. 185925J, page 364 ;**

(73) Proprietor: **Kao Corporation**
**1-14-10, Nihonbashi Kayaba-cho**
**Chuo-ku**
**Tokyo (JP)**

(72) Inventor: **Imai, Takeo**
**2-356, Midorigaoka**
**Matsudo-shi**
**Chiba-ken (JP)**
Inventor: **Iwano, Kazuko**
**7-19-21, Shakujii-machi**
**Nerima-ku**
**Tokyo (JP)**

(74) Representative: **Wächtershäuser, Günter, Prof. Dr.**
**Patentanwalt,**
**Tal 29**
**D-80331 München (DE)**

**Description**

This invention relates to a novel spherical fine particulate pigment which is readily dispersed, possesses a large tinting strength, and provides a distinct color (a color of high saturation). The invention also relates to a process for preparing such a spherical fine particulate pigment.

Description of the Background:

Conventionally, lake dyes are widely used because of their distinctness of color, availability of variety of colors, and their safety. Such lake dyes comprise a water soluble dye such as, for example, an acidic dye, and an insolubilizing agent thereof such as, for example, aluminum hydroxide carrying on its particle surface said water soluble dye absorbed. But, the aluminum lake, for example, has only a low intensity of color, and suffers a problem of color migration from the lake especially for an aqueous electrolyte solution. In order to improve the safety of dyes, there is proposed a technique for preparing a pigment by reacting a naturally occurring coloring material with a basic aluminum (Japanese Patent Laid-open No. 71128/1978). This method can provide a water insoluble pigment, but the pigment particles are large and irregular in shape. The dyes also has problems with dispersing ability and tinting strength.

The present inventors previously had found a method for improving the dissolution resistance of an aluminum lake by the use of a basic aluminum chloride, and filed a patent application (Japanese Patent Application No. 160323/1986). An aluminum lake had, however, a problem of poor tinting strength, as its dyeing concentration is only 10 to 40%. A trial has been made to render the dye insoluble by the use of a suitable precipitating agent. But, this method does not provide a satisfactory effect depending on the dye's structure. Also, the present inventors prepared a pigment by reacting a basic polyaluminum salt with a dye. But, the pigment obtained had irregularly shaped particles which tended to agglomerate to form a block with a diameter of 1 $\mu$m to some fifteen micrometers, and did not provide a desired tinting strength.

US-A-3,779,924 describes a process for preparing electrophotographic liquid developing compositions. A dye and a mordant therefor is admixed in the presence of a suitable binder, a solvent for the binder and a liquid precipitation medium; the solvent for the binder is substantially removed; and the resultant dope is added to a suitable liquid carrier to form a dispersion of finely divided toner particles having a uniform size in the order of 0.5 $\mu$m or less and containing a surfactant.

It is generally known that the smaller the pigment's particle, the larger the tinting strength of the pigment. For this reason various methods are proposed for producing pigments with fine particles. One example is a method comprising first preparing a pigment with specific comminution assisting agents added thereto, and subsequently pulverizing the pigment particles (Japanese Patent Laid-open Nos. 58061/1984 and 100168/1984). But, the pigments prepared by this method are not uniform in particle shape and size, and thus are not satisfactory in both dispersing ability and tinting strength. Another method is to prepare a powdery pigment dispersant, which comprises dispersing a pigment in a w/o type emulsion resin solution, precipitating the pigment in water, and then drying it (Japanese Patent Laid-open No. 63936/1977). The pigment prepared by this method, however, is comminuted particles of resinous agglomerates which are not uniform in shape and size, and can provide only a poor tinting strength because of its resin- composite structure. Still another method heretofore proposed is to prepare a bead-like pigment suspension by block polymerization of a pigment and a polymeric monomer, and then further effecting suspension polymerization or emulsion polymerization (Japanese Patent Laid-open No. 8033/1977). The method can provide a pigment of spherically shaped particles, but the pigment uses a resin as a carrier and the diameter of the particles ranges from 1.0 $\mu$m to tens of micrometers so that it does not provide a satisfactory tinting strength.

In order to improve the tinting strength of a dye, it is desirable to insolubilize the dye active ingredient by means of a suitable precipitating agent. But, a conventional insolubilizing reaction only provide irregularly shaped particles which are often agglomerated. Comminution of the agglomerated pigments also provides irregularly shaped and non-uniform particles with poor dispersing ability and tinting strength.

Pigment particles are often surface-treated to improve their dispersing ability, as the smaller the size of the particles the less dispersed they become. But, particles with poor uniformity cannot be easily dispersed in the treating solution, thus making it difficult to surface-treat them.

As mentioned above there has been no pigment whose particles are uniform both in shape and size, and which provides satisfactory dispersing ability and tinting strength.

The present inventors have made extensive and earnest studies in order to solve the above problems in conventional pigments, and as a result found that a pigment comprising fine and spherical particles with diameters of less than 0.5 $\mu$m can be prepared by reacting a water soluble dye and its insolubilizing agent in a w/o type emulsion water phase, and further, that treatment of the pigment particle surface with a surface active agent can provide a pigment with excellent dispersing ability and tinting strength. Such findings have led to the completion of this invention.

SUMMARY OF THE INVENTION

Accordingly, the present invention provides a spherical shaped fine particulate pigment consisting of pigment particles being the reaction product of a water soluble dye and a precipitating agent, of which the surface is coated with a nonionic surface active agent and having a diameter of not more than 0.5 micro meter, obtained by precipitating a water-soluble dye from a water-in-oil type emulsion aqueous phase which is prepared by using a nonionic surface active agent.

Another object of this invention is to provide a spherical fine particulate pigment, wherein said water soluble dye is an acidic dye and a basic polyaluminum salt or a salt of a divalent metal selected from the group consisting of calcium, barium, and zirconium is used as a precipitating agent for said water soluble dye.

Still other object of this invention is to provide a spherical fine particulate pigment, wherein said water soluble dye is a basic dye and tannic acid or a complex acid selected from the group consisting of phosphomolybdic acid and phosphotungstic acid is used as a precipitating agent for said water soluble dye.

Also, an object of this invention is to provide a spherical fine particulate pigment, wherein pigment particles with a particle diameter within ± 25% of an average particle diameter is contained in the amount of not less than 50%.

It is another object of the present invention is to provide a process for preparing a spherical fine particulate pigment which comprises reacting a water soluble dye and a precipitating agent therefor in a water-in-oil type emulsion aqueous phase which is prepared by using a nonionic surface active agent.

Other and further objects, features and advantages of this invention will appear more fully from the following description.

BRIEF DESCRIPTION OF THE DRWAING

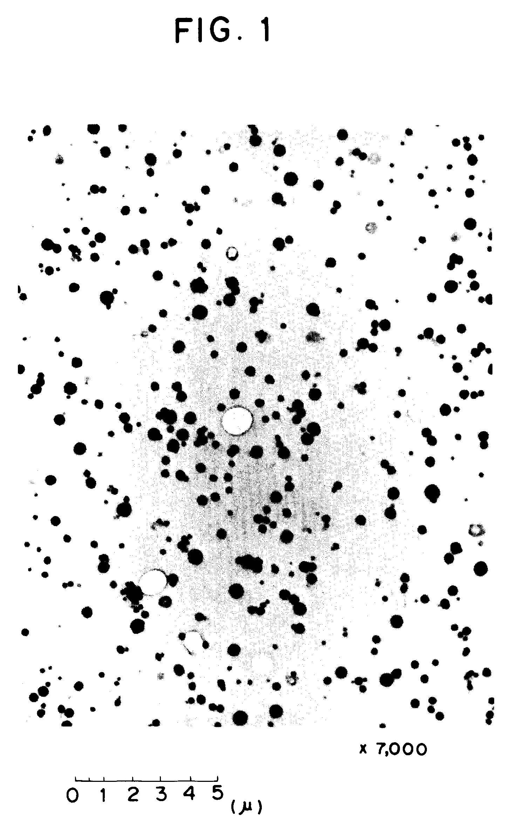

Figure 1 is a photograph taken by a transmission electronic microscope (magnification: 7,000) of the pigment particles prepared in Example 1.

DETAILED DESCRIPTION OF THE INVENTION AND PREFERRED EMBODIMENTS

Combinations of a water soluble dye and its insoluble agent are, for instance, an acidic dye and a basic salt of polyaluminum, an acidic dye and a divalent metal salt such as calcium, barium or zirconium, a basic dye and tannic acid, a basic dye and a complex acid such as phosphoniolybdic acid and phosphotungstic acid, and the like. Among these, in view of properties of pigment to be produced, the combinations of an acidic dye and a basic salt of polyaluminum, and a basic dye and a complex acid are particularly preferable.

The compounds represented by the following formula are given as examples of basic polyaluminum salts which are used as an insolubilizing agent:

$$Al_m(OH)_n X_l$$

in which X represents Cl, Br, I, or $CH_3COO^-$, and m, n and l designate positive integers satisfying the equation $3m = n + l$. Particularly preferred are the compounds represented by the above formula in which m is 14 or less, particularly 1 - 10, and X is Cl or $CH_3COO^-$. Typical examples of particularly preferred compounds are $Al(OH)_2Cl$ and $Al_2(OH)_5Cl$.

There is no specific restriction as to the kinds of water soluble dyes to be used in this invention. Given as examples of acidic dyes are legal dyestuffs such as FD & C Red No. 2, FD & C Red No. 3, CI Acid Red 18, D & C Red No. 28, CI Acid Red 94, CI Acid Red 52, FD & C Yellow No. 5, FD & C Yellow No. 6, FD & C Green No. 3, FD & C Blue No. 1, FD & C Blue No. 2, D & C Red No. 33, D & C Red No. 22, CI 45410 Acid Red 92, CI Acid Red 94, D & C Orange No. 4, D & C Orange No. 11, D & C Yellow No. 8, D & C Yellow No. 10, D & C Green No. 5, D & C Green No. 8, D & C Green No. 4, D & C Blue No. 4, CI Acid Orange No. 24, CI Acid Violet No. 9, CI 16155 Food Red No. 6, CI Acid Red No. 26, FD & C Red No. 4, EXT D & C Red No. 8, CI Acid Orange No. 20, CI Acid Yellow No. 40, CI Acid Yellow No. 1, EXT D & C Yellow No. 1, CI Acid Yellow No. 11, CI Acid Green No. 3, EXT D & C Violet No. 2, CI Acid Blue No. 1, and the like; and general acidic dyes such as CI Acid Yellow No. 7, CI Acid Yellow No. 70, CI Acid Orange No. 1, CI Acid Orange No. 8, CI Acid Orange No. 45, CI Acid Blue No. 1, CI Acid Blue No. 7, CI Acid Blue No. 15, CI Acid Blue No. 59, CI Acid Blue No. 103, CI Acid Red No. 1, CI Acid Red No. 14, CI Acid Red No. 26, CI Acid Violet No. 15, CI Acid Violet No. 49, CI Acid Green No. 9, CI Acid Green No. 41, CI Acid Black No. 24, and the like. They may be used individually or in combination.

Also, given as examples of basic dyes are legal dyes such as D & C Red No. 19, and the like; and general dyes such as CI Basic Yellow No. 2, CI Basic Orange No. 14, CI Basic Red No. 1, CI Basic Red No. 12, CI Basic Red, CI Basic Violet No. 1, CI Basic Violet No. 3, CI Basic Violet No. 14, CI Basic Blue No. 1, CI Basic Blue No. 5, CI Basic Blue No. 7, CI Basic Blue No. 9, CI Basic Blue No. 26, CI Basic Green No. 1, CI Basic Green No. 4, CI Basic Green, CI Basic Brown No. 1, and the like. They may be used either individually or in combination.

The pigment particles according to this invention have a spherical shape with a diameter of not more than 0.5 $\mu$m, preferably not more than 0.2 $\mu$m, and are surface-treated with a surface active agent. In order to prepare such a pigment, a water soluble dye and its insolubilizing agent are reacted in a w/o type emulsion water phase which is prepared using a nonionic surface active agent.

More specifically, the pigment of the present invention can be prepared by preparing w/o type emulsions using an oil component and a surface active agent for both an aqueous solution of the water soluble dye and an aqueous solution of insolubilizing agent, mixing the two w/o type emulsions to effect reaction, and then eliminating water from the resulting mixture. Alternatively, the pigment can be prepared by first preparing a w/o type emulsion of an aqueous solution of either the water soluble dye or of its insolubilizing agent using an oil component and a surface active agent, adding to the w/o type emulsion the other of an aqueous solution of the water soluble dye or of its insolubilizing agent to effect reaction, and then eliminating the water from the resulting mixture.

A nonionic surface active agent used for preparing the w/o type emulsion may be of the sorbitan fatty acid ester type, glycerol fatty acid ester type, polyoxyethylene alkyl ether type (with not more than 5 mols of ethylene oxide added), lanolin fatty acid ester type, cholesterol ester type, alkyl glyceryl ether type, or the like. The alkyl glyceryl ether type surface active agent is preferable for stability of the system. An oil component used may be a hydrocarbon such as liquid paraffin, paraffin wax, serecin, squalan, and the like; a wax such as bees wax, spermaceti, carnauba wax, and the like; a naturally available animal or vegetable oil or fat such as olive oil, camellia oil, lanolin, and the like; silicone oil, fatty acid, higher alcohol, or an ester oil obtained by reacting them. Particularly preferable oil components are nonpolar oils such as liquid paraffin.

Concentrations of the water soluble dye and the insolubilizing agent in the above reaction may be arbitrarily determined within the range of from 1 to 50% by weight (hereinafter designated simply as "%"). But, it is desirable that their concentrations be from 1 to 10% when their emulsions are prepared. Also, it is desirable that the concentration of the aqueous solution of the water soluble dye or the insolubilizing agent to be added to the emulsion be as close as the saturated concentration of the compound. This saturated concentration depends on the kind of the water soluble dye or the insolubilizing agent used, but a preferable range is usually from 1 to 10%. The proportion of the oil component used when the emulsion is prepared may be arbitrarily determined within the range of from 1 to 99%. But, the preferable range in view of the reaction performance is approximately from 10 to 40%. Also, the proportion of the surface active agent may be arbitrarily determined within the range of from 0.5 to 99%. But, the preferable range for stability of the system and in view of the reaction performance is from 2 to 70%. The reaction temperature is usually from room temperature to approximately 90°C. The desirable temperature at which the water contained in the system after the reaction is eliminated is 120 to 200°C.

The pigment thus prepared is spherical in its particle shape with no irregularity in the particle size, and has a low bulk density. The desired particle diameter of 0.5 $\mu$m or less may be obtained by controlling the size of drops in the emulsion by means of a colloid mill type homogenizer. The size of the particles can also be regulated by changing the composition of the emulsion. Use of micro-emulsions can produce fine particles. Another feature of the pigment according to the present invention is that the surface of the pigment particles is treated by the nonionic surface active agent used when the emulsion is prepared.

Since the pigment prepared according to the process of this invention comprises particles which are spherical in shape and minute in size, and of which the surface is treated by a surface active agent, it has such an excellent dispersing ability that even the primary particles can be dispersed with ease. In addition, the pigment particles are so minute and homogeneous that they can exert an outstanding tinting strength. Thus, the pigment has a wide variety of uses in the field of cosmetics, paints or inks.

Other features of the invention will become apparent in the course of the following description of the exemplary embodiments which are given for illustration of the invention and are not intended to be limiting

4

thereof.

EXAMPLES

Example 1

Monoisostearylglyceryl ether weighing 2.0 gm was added to 20.0 gm of liquid paraffin, and the mixture was heated to 80°C. To this mixture 0.7 g of a basic polyaluminum salt [Al$_2$(OH)$_5$Cl] dissolved in 71.8 g of water and heated to 80°C was added slowly while the mixture was stirred to obtain a w/o type emulsion. The size of the emulsion drops was adjusted to about 1.2 μm by regulating the clearance through which the emulsion is fed to a colloid mill type homogenizer. 0.5 g of FD & C Yellow No. 5 (C.I. 19140) dissolved in 5.0 g of water was added to the emulsion thus prepared, and stirred. Water was eliminated by heating the system to 150°C, and the residue was washed with n-hexane, which was then distilled off to dryness in vacuo to obtain a pigment which is a basic FD & C Yellow No. 5 salt of polyaluminum. Observation of the particle image by means of a transmission electronic microscope revealed that the average particle size is 0.20 μm, and the the particles are spherical in shape and homogeneous in size. Further it was confirmed that the pigment contained the dye component at a concentration of approximately 40%.

Example 2

A pigment was prepared in the same manner as in Example 1, except that the size of emulsion drops was adjusted to 0.6 μm. The pigment obtained was comprised of spherical and homogeneous particles with an average particle size of 0.07 μm.

Example 3

Monoisostearylglyceryl ether weighing 70 g was added to 15 g of liquid paraffin, and the mixture was heated to 80°C. To this mixture 0.7 g of a basic polyaluminum salt [Al$_2$(OH)$_5$Cl] dissolved in 10 g of water and heated to 80°C was added slowly while the mixture was stirred to obtain a w/o type emulsion. Added to the emulsion thus prepared was 0.5 g of FD & C Yellow No. 5 (C.I. 19140) dissolved in 5.0 g of water, and the mixture was stirred. Water was eliminated by heating the system to 150°C, and the residue was washed with n-hexane, which was then distilled off to dryness in vacuo to obtain a pigment which is a basic FD & C Yellow No. 5 salt of polyaluminum. The pigment obtained was comprised of spherical and homogeneous particles with an average particle size of 0.04 μm.

Example 4

Monoisostearylglyceryl ether weighing 8.0 g was added to 16 g of liquid paraffin, and the mixture was heated to 80°C. To this mixture 0.5 g of a basic polyaluminum salt [Al$_2$(OH)$_5$Cl] dissolved in 60 g of water and heated to 80°C was added slowly while the mixture was stirred to obtain a w/o type emulsion. Added to the emulsion thus prepared was 0.4 g of FD & C Red No. 2 (C.I. 16185) dissolved in 15 g of water, and the mixture was stirred. Water was eliminated by heating the system to 150°C, and the residue was washed with n-hexane, which was then distilled off to dryness in vacuo to obtain a pigment which is a basic FD & C Red No. 2 salt of polyaluminum. The pigment obtained was comprised of spherical and homogeneous particles with an average particle size of 0.10 μm.

Example 5

Monoisostearylglyceryl ether weighing 8.0 g was added to 16 g of liquid paraffin, and the mixture was heated to 80°C. To this mixture 0.5 g of a basic polyaluminum salt [Al$_2$(OH)$_5$Cl] dissolved in 60 g of water and heated to 80°C was added slowly while the mixture was stirred to obtain a w/o type emulsion. Added to the emulsion thus prepared was 0.4 g of Cl Acid Red No. 18 (C.I. 16255) dissolved in 15 g of water and the mixture stirred. Water was eliminated by heating the system to 150°C, and the residue was washed with n-hexane, which was then distilled off to dryness in vacuo to obtain a pigment which is a basic Cl Acid Red No. 18 salt of polyaluminum. The pigment obtained was comprised of spherical and homogeneous particles with an average particle size of 0.07 μm.

Example 6

Monoisostearylglyceryl ether weighing 8.0 g was added to 16 g of liquid paraffin, and the mixture was heated to 80°C. To this mixture 0.5 g of a basic polyaluminum salt [Al$_2$(OH)$_5$Cl] dissolved in 60 g of water and heated to 80°C was added slowly while the mixture was stirred to obtain a w/o type emulsion. Added to the emulsion thus prepared was 0.4 g of D & C Green No. 8 (C.I. 59040) dissolved in 15 gm of water and the mixture was stirred. Water was eliminated by heating the system to 150°C, and the residue was washed with n-hexane, which was then distilled off to dryness in vacuo to obtain a pigment which is a basic D & C Green No. 8 salt of polyaluminum. The pigment obtained was comprised of spherical and homogeneous particles with an average particle size of 0.10 $\mu$m.

Example 7

Monoisostearylglyceryl ether weighing 8.0 g was added to 16 g of liquid paraffin, and the mixture was heated to 80°C. To this mixture 0.5 g of a basic polyaluminum salt [Al$_2$(OH)$_5$Cl] dissolved in 60 g of water and heated to 80°C was added slowly while the mixture was stirred to obtain a w/o type emulsion. To the emulsion thus prepared was added 0.5 g of FD & C Blue No. 2 (C.I. 73015) dissolved in 15 g of water and the mixture was stirred. Water was eliminated by heating the system to 150°C, and the residue was washed with n-hexane, which was then distilled off to dryness in vacuo to obtain a pigment which is a basic FD & C Blue No. 2 salt of polyaluminum. The pigment obtained was comprised of spherical and homogeneous particles with an average particle size of 0.10 $\mu$m.

Example 8

Polyoxyethylene (4) laurylether weighing 8.0 g was added to 16 g of liquid paraffin, and the mixture was heated to 80°C. To this mixture 0.5 g of a basic polyaluminum salt [Al$_2$(OH)$_5$Cl] dissolved in 60 g of water and heated to 80°C was added slowly while the mixture was stirred to obtain a w/o type emulsion. To the emulsion thus prepared 0.8 g of FD & C Blue No. 1 (C.I. 42090) dissolved in 15 g of water was added and stirred. Water was eliminated by heating the system to 150°C, and the residue was washed with n-hexane, which was then distilled off to dryness in vacuo to obtain a pigment which is a basic FD & C Blue No. 1 salt of polyaluminum. The pigment obtained was comprised of spherical and homogeneous particles with an average particle size of 0.30 $\mu$m.

Example 9

Polyoxyethylene (4) laurylether weighing 8.0 g was added to 16 g of liquid paraffin, and the mixture was heated to 80°C. To this mixture 0.6 g of phosphomolybdic acid dissolved in 60 g of water and heated to 80°C was added slowly while the mixture was stirred to obtain a w/o type emulsion. To the emulsion thus prepared 0.5 g of D & C Red No. 19 (C.I. 45170) dissolved in 15 g of water was added and stirred. Water was eliminated by heating the system to 150°C, and the residue was washed with n-hexane, which was then distilled off to dryness in vacuo to obtain a lake pigment which is a basic D & C Red No. 19 phosphomolybdate.

Example 10

Sorbitan sesquioleate weighing 8.0 g was added to 16 g of liquid paraffin, and the mixture was heated to 80°C. To this mixture 0.5 g of a basic polyaluminum salt [Al$_2$(OH)$_5$Cl] dissolved in 60 g of water and heated to 80°C was added slowly while the mixture was stirred to obtain a w/o type emulsion. To the emulsion thus prepared 0.8 gm of FD & C Blue No. 1 (C.I. 42090) dissolved in 15 g of water was added and stirred. Water was eliminated by heating the system to 150°C, and the residue was washed with n-hexane, which was then distilled off to dryness in vacuo to obtain a lake pigment which is a basic FD & C Blue No. 1 salt of polyaluminum. The pigment obtained was comprised of spherical and homogeneous particles with an average particle size of 0.15 $\mu$m.

Comparative Example 1

A basic aluminum chloride [Al$_2$(OH)$_5$Cl] weighing 0.7 g was dissolved in 93.5 g of water, heated to 80°C, was added 0.5 g of FD & C Yellow No. 5 (C.I. 19140) dissolved in 5.0 g of water, and the mixture was stirred. The pigment thus produced was filtered and dried. The pigment which was in an agglomerated state was pulverized by means of a ball mill. The product obtained was comprised of irregularly shaped particles with diameters in the range of 1.0 to 3 $\mu$m.

Comparative Example 2

Phosphomolybdic acid weighing 0.6 g was dissolved in 60 g of water, and heated to 80°C. To this mixture 0.5 g of FD & C Red No. 2 (C.I. 16185) dissolved in 15 gm of water was added and stirred. The pigment thus produced was filtered and dried. The pigment which was in an agglomerated state was pulverized by means of an automatic mortar. The product obtained was comprised of irregularly shaped particles with diameters in the range of 1.5 to 3 $\mu$m.

Test Example 1

The dispersing abilities in an oil of pigments prepared in Examples 1 and 2, and Comparative Example 1, as well as that of a commercially available aluminum lake pigment were tested. In this test, 0.5 g of each pigment was put into 100 ml of a linear paraffinic solvent, dispersed by a ultrasonic dispersing machine for 30 seconds, and left to stand. The dispersion conditions at 5 and 10 minutes after dispersion were observed. The results are shown in Table 1, in which the following standards of the dispersion conditions shall apply:

DDD: No dispersion
CCC: Partly dispersed
BBB: Almost dispersed
AAA: Completely dispersed

Table 1

| | Dispersion Conditions | | | |
|---|---|---|---|---|
| | Ex. 1 | Ex. 2 | Compar. Ex. 1 | Commercial Product |
| Immediately after dispersion | AAA | AAA | CCC | CCC |
| 5 min. after dispersion | AAA | AAA | CCC | CCC |
| 10 min. after dispersion | BBB | BBB | DDD | DDD |

Test Example 2

The dispersing abilities in an oil of pigments prepared in Example 9 and Comparative Example 2 were tested. In this test, 1.0 g of each pigment was put into 100 ml of n-hexane, dispersed by a ultrasonic dispersing machine for 1 minute, and left to stand. The dispersion conditions at 5 minutes after dispersion were observed. The results are shown in Table 2, in which the same standard of the dispersion conditions as in Test Example 1 above shall apply.

Table 2

| | Dispersion Conditions | |
|---|---|---|
| | Example 9 | Comparative Example 2 |
| Immediately after dispersion | AAA | CCC |
| 5 min. after dispersion | BBB | DDD |

Test Example 3

The tinting strengths of pigments prepared in Examples 1 and 2, and Comparative Example 1, as well as a commercially available aluminum lake pigment were tested. In this test, 0.5 g of each pigment and 0.2 g of titanium oxide were dispersed in 10 ml of hot-melted solid paraffin and cooled down to solidify. The samples were then macroscopically observed for evaluation of tinting conditions. The results are shown in Table 3, in which the following standards of the tinting strength shall apply:

CCC:    Normal tinting strength
BBB:    High tinting strength
AAA:    Exceptionally high tinting strength

Table 3

|  | Tinting strength |
| --- | --- |
| Example 1 | BBB |
| Example 2 | AAA |
| Comparative Example 1 | BBB |
| Commercial Pigment | CCC |

**Claims**

**Claims for the following Contracting States : DE, FR, GB, IT**

1.    A spherical shaped fine particulate pigment consisting of pigment particles being the reaction product of a water soluble dye and a precipitating agent, of which the surface is coated with a nonionic surface active agent and having a diameter of not more than 0.5 micro meter, obtained by precipitating a water-soluble dye from a water-in-oil type emulsion aqueous phase which is prepared by using a nonionic surface active agent.

2.    A spherical fine particulate pigment as claimed in Claim 1, wherein said water soluble dye is an acidic dye and a basic polyaluminum salt or a salt of a divalent metal selected from the group consisting of calcium, barium, and zirconium is used as an precipitating agent for said water soluble dye.

3.    A spherical fine particulate pigment as claimed in Claim 1, wherein said water soluble dye is a basic dye and tannic acid or a complex acid selected from the group consisting of phosphomolybdic acid and phosphotungstic acid is used as an precipitating agent for said water soluble dye.

4.    A spherical fine particulate pigment as claimed in Claim 1, wherein pigment particles with a particle diameter within ± 25% of an average particle diameter is contained in the amount of not less than 50%.

5.    A process for preparing a spherical fine particulate pigment which comprises reacting a water soluble dye and a precipitating agent therefor in a water-in-oil type emulsion aqueous phase which is prepared by using a nonionic surface active agent.

**Claims for the following Contracting State : ES**

1.    A process for preparing a spherical fine particulate pigment which comprises reacting a water soluble dye and a precipitating agent therefor in a water-in-oil type emulsion aqueous phase which is prepared by using a nonionic surface active agent.

2.    A process according to Claim 1 for producing pigment particles of which the surface is coated with a nonionic surface active agent and having a diameter of not more than 0.5 micro meter.

3.    A process according to Claim 1 wherein said water soluble dye is an acidic dye and a basic polyaluminum salt or a salt of a divalent metal selected from the group consisting of calcium, barium, and zirconium is used as a precipitating agent for said water soluble dye.

4.    A process according to Claim 1, wherein said water soluble dye is a basic dye and tannic acid or a complex acid selected from the group consisting of phosphomolybdic acid and phosphotungstic acid is used as a precipitating agent for said water soluble dye.

**5.** A process according to Claim 1 which produces a spherical fine particulate pigment, wherein pigment particles with a particle diameter within ± 25% of an average particle diameter are contained in the amount of not less than 50%.

## Patentansprüche
### Patentansprüche für folgende Vertragsstaaten : DE, FR, GB, IT

**1.** Kugelförmiges, feinteiliges Pigment, bestehend aus Pigmentteilchen, die das Reäktionsprodukt eines wasserlöslichen Farbstoffes und eines Fällungsmittels sind, deren Oberfläche mit einem nichtionischen Tensid beschichtet ist und die einen Durchmesser von nicht mehr als 0,5 $\mu$m aufweisen, erhalten durch Fällen eines wasserlöslichen Farbstoffes aus einer wässerigen Phase einer Emulsion vom Wasser-in-Öl-Typ, die unter Verwendung eines nichtionischen Tensids hergestellt wird.

**2.** Kugelförmiges, feinteiliges Pigment nach Anspruch 1, wobei der wasserlösliche Farbstoff ein saurer Farbstoff ist und ein basisches Polyaluminiumsalz oder ein Salz eines zweiwertigen Metalls, ausgewählt aus der Gruppe, bestehend aus Calcium, Barium und Zirkonium, als Fällungsmittel für den wasserlöslichen Farbstoff verwendet wird.

**3.** Kugelförmiges, feinteiliges Pigment nach Anspruch 1, wobei der wasserlösliche Farbstoff ein basischer Farbstoff ist und Gerbsäure oder eine Komplexsäure, ausgewählt aus der Gruppe, bestehend aus Molybdätophosphorsäure und Wolframatophosphorsäure, als Fällungsmittel für den wasserlöslichen Farbstoff verwendet wird.

**4.** Kugelförmiges, feinteiliges Pigment nach Anspruch 1, wobei die Pigmentteilchen mit einem Teilchendurchmesser innerhalb ±25 % des durchschnittlichen Teilchendurchmessers in einer Menge von nicht weniger als 50 % enthalten sind.

**5.** Verfahren zur Herstellung eines kugelförmigen, feinteiligen Pigments, umfassend Umsetzen eines wasserlöslichen Farbstoffes und eines Fällungsmittels dafür in einer wässerigen Phase einer Emulsion vom Wasser-in-Öl-Typ, die unter Verwendung eines nichtionischen Tensids hergestellt wird.

### Patentansprüche für folgenden Vertragsstaat : ES

**1.** Verfahren zur Herstellung eines kugelförmigen, feinteiligen Pigments, umfassend Umsetzen eines wasserlöslichen Farbstoffes und eines Fällungsmittels dafür in einer wässerigen Phase einer Emulsion vom Wasser-in-Öl-Typ, die unter Verwendung eines nichtionischen Tensids hergestellt wird.

**2.** Verfahren nach Anspruch 1 zur Herstellung von Pigmentteilchen, deren Oberfläche mit einem nichtionischen Tensid beschichtet ist und die einen Durchmesser von nicht mehr als 0,5 $\mu$m aufweisen.

**3.** Verfahren nach Anspruch 1, wobei der wasserlösliche Farbstoff ein saurer Farbstoff ist und ein basisches Polyaluminiumsalz oder ein Salz eines zweiwertigen Metalls, ausgewählt aus der Gruppe, bestehend aus Calcium, Barium und Zirkonium, als Fällungsmittel für den wasserlöslichen Farbstoff verwendet wird.

**4.** Verfahren nach Anspruch 1, wobei der wasserlösliche Farbstoff ein basischer Farbstoff ist und Gerbsäure oder eine Komplexsäure, ausgewählt aus der Gruppe, bestehend aus Molybdatophosphorsäure und Wolframatophosphorsäure, als Fällungsmittel für den wasserlöslichen Farbstoff verwendet wird.

**5.** Verfahren nach Anspruch 1, zur Herstellung eines kugelförmigen, feinteiligen Pigments, wobei die Pigmentteilchen mit einem Teilchendurchmesser innerhalb ±25 % des durchschnittlichen Teilchendurchmessers in einer Menge von nicht weniger als 50 % enthalten sind.

**Revendications**
**Revendications pour les Etats contractants suivants : DE, FR, GB, IT**

1. Pigment en fines particules de forme sphérique, constitué de particules de pigment qui sont le produit de la réaction d'un colorant soluble dans l'eau et d'un agent de précipitation, dont la surface est revêtue d'un agent tensioactif non ionique, et qui présentent un diamètre non supérieur à 0,5 micromètre et sont obtenues par la précipitation d'un colorant soluble dans l'eau à partir d'une phase aqueuse en émulsion de type eau dans l'huile préparée en recourant à un agent tensioactif non ionique.

2. Pigment en fines particules sphériques selon la revendication 1, dans lequel ledit colorant soluble dans l'eau est un colorant acide, un sel basique de polyaluminium ou un sel d'un métal bivalent choisi dans le groupe constitué du calcium, du baryum et du zirconium étant utilisé comme agent de précipitation dudit colorant soluble dans l'eau.

3. Pigment en fines particules sphériques selon la revendication 1, dans lequel ledit colorant soluble dans l'eau est un colorant basique, l'acide tannique ou un acide complexe choisi dans le groupe constitué de l'acide phosphomolybdique et de l'acide phosphotungstique étant utilisé comme agent de précipitation dudit colorant soluble dans l'eau.

4. Pigment en fines particules sphériques selon la revendication 1, dans lequel les particules de pigment présentant un diamètre de particule situé à l'intérieur d'une plage de ± 25% autour d'un diamètre moyen des particules représentent une quantité non inférieure à 50%.

5. Procédé de préparation d'un pigment en fines particules sphériques, qui comprend la réaction d'un colorant soluble dans l'eau et d'un agent de précipitation de celui-ci, dans une phase aqueuse en émulsion du type eau dans l'huile, préparée en recourant à un agent tensioactif non ionique.

**Revendications pour l'Etat contractant suivant : ES**

1. Procédé de préparation d'un pigment en fines particules sphériques, qui comprend la réaction d'un colorant soluble dans l'eau et d'un agent de précipitation de celui-ci, dans une phase aqueuse en émulsion du type eau dans l'huile, préparée à l'aide d'un agent tensioactif non ionique.

2. Procédé selon la revendication 1 pour la production de particules de pigment dont la surface est revêtue d'un agent tensioactif non ionique et qui présentent un diamètre non supérieur à 0,5 micromètre.

3. Procédé selon la revendication 1, dans lequel ledit colorant soluble dans l'eau est un colorant acide, un sel basique de polyaluminium ou un sel d'un métal bivalent choisi dans le groupe constitué du calcium, du baryum et du zirconium, étant utilisé comme agent de précipitation dudit colorant soluble dans l'eau.

4. Procédé selon la revendication 1, dans lequel ledit colorant soluble dans l'eau est un colorant basique, l'acide tannique ou un acide complexe choisi dans le groupe constitué de l'acide phosphomolybdique et de l'acide phosphotungstique étant utilisé comme agent de précipitation dudit colorant soluble dans l'eau.

5. Procédé selon la revendication 1, qui fournit un pigment en fines particules sphériques, dans lequel les particules de pigment présentant un diamètre de particule situé à l'intérieur d'une plage de ± 25% autour d'un diamètre moyen de particules représentent une quantité non inférieure à 50%.

# FIG. 1

x 7,000

0 1 2 3 4 5 (μ)